# FASCICULE DE BREVET EUROPEEN

(11) **EP 2 720 894 B1**
(45) Date de publication et mention de la délivrance du brevet: **13.01.2016**
(21) Numéro de dépôt: 12731027.4
(22) Date de dépôt: 21.05.2012
(51) Int. Cl.: B60K 11/04, F28F 9/00, F28D 21/00, F04D 19/00, F04D 29/08, F04D 29/60

(54) **PROCEDE ET DISPOSITIF D'ASSEMBLAGE D'UN GROUPE MOTO VENTILATEUR ET D'UN RADIATEUR POUR UN MOTEUR DE VEHICULE AUTOMOBILE ET ENSEMBLE DE GROUPE MOTO VENTILATEUR ET RADIATEUR OBTENU**
VERFAHREN UND VORRICHTUNG ZUR MONTAGE EINES MOTORGEBLÄSEAGGREGATS UND KÜHLER FÜR EINEN KRAFTFAHRZEUGMOTOR SOWIE AUF DIESE WEISE HERGESTELLTES MOTORGEBLÄSEAGGREGAT UND KÜHLERANORDNUNG
METHOD AND DEVICE FOR ASSEMBLING A MOTOR-FAN UNIT AND A RADIATOR FOR A MOTOR VEHICLE ENGINE AND MOTOR-FAN UNIT AND RADIATOR ASSEMBLY OBTAINED

(30) Priorité: 20.06.2011 FR 1155362
(43) Date de publication de la demande: 23.04.2014
(73) Titulaire: Renault S.A.S., 92100 Boulogne-Billancourt (FR)
(72) Inventeur: LECROQ, Dominique, F-27540 Ivry La Bataille (FR); DAVID, Patrick, F-78310 Maurepas (FR)
(86) Numéro de dépôt international: PCT/FR2012/051121
(87) Numéro de publication internationale: WO 2012/175831

(56) Documents cités:
- EP-A2- 1 048 505
- DE-A1-102006 060 085
- FR-A1- 2 922 823
- US-A1- 2003 062 456

## Description

L'invention concerne un procédé et dispositif d'assemblage d'un groupe moto ventilateur et d'un radiateur pour un moteur de véhicule automobile, et l'ensemble de groupe moto ventilateur et radiateur obtenu.

On sait que l'espace pour monter et démonter un groupe moto ventilateur sur un radiateur de moteur de véhicule automobile est réduit à un espace vertical étroit devant le moteur, notamment en raison de la compacité des moteurs et véhicules actuels.

De plus, on sait que le jeu de montage de périphérie entre le groupe moto ventilateur et le radiateur génère une fuite d'air latéral par ledit jeu ce qui diminue le rendement aéraulique du groupe moto ventilateur.

On connaît dans la pratique un assemblage d'un groupe moto ventilateur et d'un radiateur de moteur obtenu par translation verticale sur glissières et clippage de fixation du groupe moto ventilateur sur le radiateur. Cet assemblage ne permet pas de conférer un jeu serré dans le montage du groupe moto ventilateur et radiateur, notamment lorsque ces éléments sont du type à chicane d'étanchéité à recouvrement du bord d'assemblage.

On connaît également un assemblage d'un groupe moto ventilateur et d'un radiateur du type à chicanes précité, obtenu par une translation horizontale et fixation par vis du groupe moto ventilateur sur le radiateur. Cet assemblage nécessite un espace de dégagement pour monter et démonter le groupe moto ventilateur sur le radiateur qui est plus important que le précédent, notamment pour l'accessibilité aux vis de fixation. De plus, le temps de montage (vissage) et les moyens utilisés (vis, entretoise d'appui, matériel de vissage) sont également plus importants.

On connaît du document US 2003/062456 A un dispositif d'assemblage selon le préambule de la revendication 1.

Il existe donc un besoin pour un procédé et dispositif d'assemblage d'un groupe moto ventilateur et d'un radiateur pour un moteur de véhicule automobile qui permette le montage et démontage du groupe moto ventilateur sur le radiateur dans un espace restreint de dégagement dans le véhicule, et qui permette un assemblage à jeu serré de chicane, en particulier pour un groupe moto ventilateur et radiateur à chicanes d'étanchéité en recouvrement de bord.

Il est proposé un dispositif d'assemblage d'un groupe moto ventilateur à un radiateur d'un véhicule automobile. Ce radiateur peut être associé à un circuit de refroidissement destiné au refroidissement du moteur du véhicule ou à d'autres circuits de refroidissement du véhicule.

Le dispositif d'assemblage selon l'invention est défini dans la revendication 1.

Le dispositif d'assemblage selon l'invention permet ainsi de positionner à une distance prédéterminée les cadres supports l'un par rapport à l'autre, de sorte qu'un jeu serré, par exemple de 1 à 3 mm peut être obtenu entre les cadres supports sur toute leur périphérie, permettant de garantir un jeu de montage et d'optimiser l'étanchéité et le rendement aéraulique. Ce positionnement précis peut être obtenu sans endommagement malgré la présence d'une ou plusieurs chicanes sur le pourtour du ou des cadres.

Les parties supérieures et inférieures des cadres seront de préférence maintenues à une même distance prédéterminée l'une de l'autre après assemblage pour un meilleur rendement aéraulique, bien que des distances différentes soient aussi envisageables.

Les cadres supports sont de préférence conformés en sorte que le groupe moto ventilateur et le radiateur soient inscrits dimensionnellement dans chacun de leur cadre support respectif.

Avantageusement, les cadres supports font partie intégrante du groupe moto-ventilateur et du radiateur respectivement.

L'un des cadres supports, par exemple le cadre du groupe de moto ventilateur, peut comporter deux chicanes périphériques, une chicane externe longue destinée à venir en recouvrement d'un bord périphérique latéral correspondant de l'autre cadre support, par exemple le cadre support du radiateur, et une chicane interne, en retrait relativement à la chicane externe et destinée à être positionnée en regard du bord périphérique frontal correspondant de l'autre cadre support, à une distance prédéterminée dudit bord périphérique frontal.

Ces chicanes sont destinées à former une barrière à double étanchéité de périphérie entre les cadres et donc entre le groupe moto ventilateur et le radiateur. Leur positionnement à une distance prédéterminée, et notamment à jeu serré (par exemple de 1 à 3 mm) permet d'améliorer le rendement aéraulique.

L'élément d'indexage latéral des cadres supports peut comporter un simple talon solidaire d'un élément d'un point de fixation apte à être appliqué latéralement contre une surface complémentaire de l'autre élément dudit point de fixation.

Avantageusement, l'élément de verrouillage de l'assemblage des cadres supports comprend un élément d'un point de fixation inférieur mobile entre une position de verrouillage, dans laquelle il bloque le déplacement d'un doigt au fond de la branche inférieure du logement en L correspondant, et une position de déverrouillage autorisant le déplacement dudit doigt hors de ladite branche inférieure du logement en L.

Un tel élément peut être aisément manipulé pour le verrouillage ou le déverrouillage des cadres supports.

En particulier, le déplacement de la position déverrouillée à la position verrouillée peut être provoqué par le coulissement du doigt de fixation inférieur à l'intérieur du logement en L. L'assemblage des cadres supports, et notamment du cadre support du groupe moto ventilateur et du cadre support du radiateur et par suite l'assemblage du groupe moto ventilateur et du radiateur, ne nécessite alors aucun outil et le verrouillage en position du groupe moto ventilateur relativement au radiateur est rapide.

Avantageusement, la branche principale du logement en L peut être définie d'une part par la branche principale de la patte en L et d'autre part par une surface interne du cadre support auquel est solidarisée ladite patte, en regard de la branche principale de celle-ci. Cette surface interne est conformée de manière à maintenir écartée d'une distance prédéterminée la partie inférieure du cadre support portant les doigts de la partie inférieure de l'autre cadre support, lorsque les doigts de point de fixation inférieur sont insérés chacun dans la branche principale du logement en L, appliqués contre cette surface interne.

Ceci permet de monter un groupe moto ventilateur à chicane d'étanchéité sur un radiateur, dans un espace minimal devant le radiateur et d'obtenir un contrôle du jeu de chaque côté de l'assemblage et sans risque de l'agresser.

Les cadres supports du groupe moto ventilateur et radiateur étant montés sur le groupe moto ventilateur et le radiateur respectivement, le procédé de mise en oeuvre du dispositif d'assemblage comprend les phases suivantes :
- pré positionner l'un ou premier des cadres supports par rapport à l'autre cadre support en le disposant de sorte que les doigts soient en regard de l'ouverture des logements en U et en L définis par les pattes correspondantes, les cadres supports étant indexés latéralement l'un par rapport à l'autre,
- translater vers le bas le premier cadre support relativement à l'autre cadre support, les doigts des points de fixation glissant vers le bas respectivement à l'intérieur de chacun des logements en U et en L, jusqu'au fond du logement en U,
- pousser la partie inférieure du premier cadre support vers l'autre cadre support afin de translater chacun des doigts de points de fixation inférieur au fond de la branche inférieure de logement en L correspondante, et
- verrouiller l'engagement de chacun des doigts de points de fixation inférieur au fond de la branche inférieure de logement en L.

Lorsque l'un des cadres supports, par exemple le cadre support du groupe de moto ventilateur, comporte deux chicanes périphériques, une chicane externe longue destinée à venir en recouvrement d'un bord périphérique latéral correspondant de l'autre cadre support et une chicane interne, en retrait relativement à la chicane externe et destinée à être positionnée en regard d'un bord périphérique frontal correspondant dudit autre cadre support, (par exemple du radiateur), dans ce cas, pour l'assemblage du groupe moto ventilateur et radiateur on réalise les étapes suivantes :
- un pré positionnement d'assemblage du cadre support comportant les chicanes relativement à l'autre cadre support, dans lequel les doigts sont en regard de l'ouverture des logements en U et en L définis par les pattes correspondantes, les cadres supports étant indexés latéralement l'un par rapport à l'autre, et où la chicane externe est au dessus de la partie supérieure du bord périphérique latéral de l'autre cadre support et la chicane interne du cadre support est positionnée en regard de la partie supérieure du bord périphérique frontal de l'autre cadre support, à une distance prédéterminée dudit bord périphérique frontal,
- une translation vers le bas du cadre support comportant les chicanes relativement à l'autre cadre support, chacun des doigts des points de fixation glissant vers le bas à l'intérieur des logements en U et en L correspondants, jusqu'à venir au fond du logement en U, où la chicane externe du cadre support vient en recouvrement sur la partie supérieure du bord périphérique latéral de l'autre cadre support,
- la translation de la partie inférieure du cadre support comportant les chicanes vers l'autre cadre support, les doigts de chacun des points de fixation inférieure glissant dans la branche inférieure du logement en L jusqu'à venir ainsi au fond de ce logement, la chicane externe étant alors en recouvrement de la partie inférieure du bord périphérique latéral de l'autre cadre support, et
- un verrouillage en position du cadre support comportant les chicanes relativement à l'autre cadre support.

Un mode de réalisation de l'invention est à présent décrit à titre d'exemple en référence aux dessins annexés, sur lesquels :
- La figure 1 est une vue en perspective d'un ensemble d'un groupe moto ventilateur et d'un radiateur de moteur de véhicule automobile assemblé selon le mode de réalisation précité,
- Les figures 2 à 4 montrent les diverses phases du procédé de mise en oeuvre du dispositif d'assemblage du groupe moto ventilateur au radiateur selon le mode de réalisation précité, et
- Les figures 5 et 6 sont respectivement une vue en élévation sans doigt de fixation et une vue en perspective avec doigt de fixation du point de fixation à indexage latéral de l'assemblage des cadres supports.

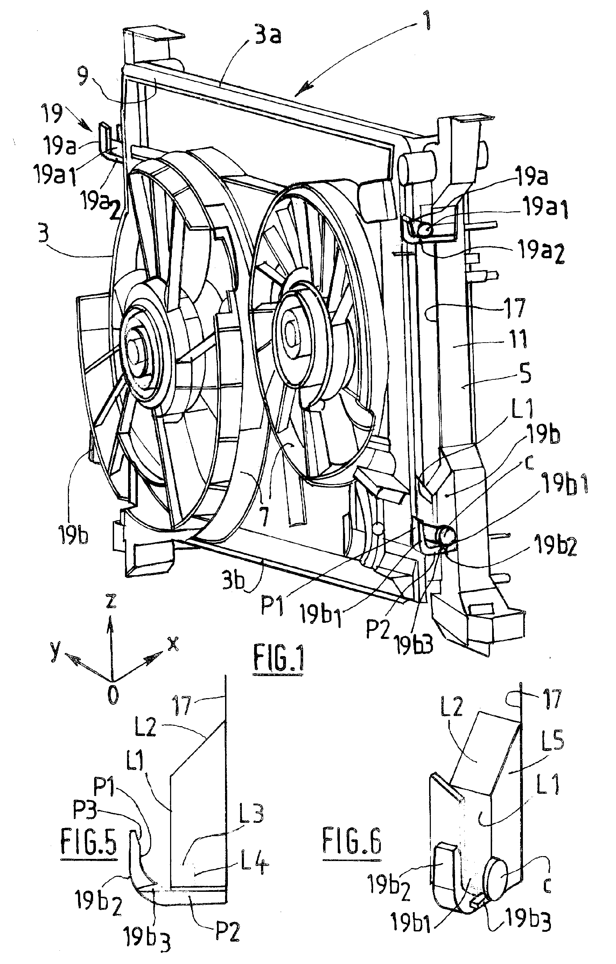

On a représenté un repère orthonormé d'axes X, Y et Z sur la figure 1.

Comme représenté à la figure 1, un ensemble 1 de refroidissement comprend un groupe moto ventilateur 3 et un radiateur 5 de circuit de refroidissement de véhicule automobile accouplés l'un à l'autre.

Cet ensemble 1 est destiné à être monté de façon compacte, par exemple dans un compartiment avant moteur du véhicule. Dans un tel compartiment, disposé en général à l'avant du moteur (non représenté), l'espace prévu pour monter le groupe moto ventilateur 3 sur le radiateur 5 est réduit.

Le groupe moto ventilateur 3 comporte dans le cas présent deux ventilateurs 7 disposés adjacents l'un à l'autre et dans un même plan, ces ventilateurs étant destinés à souffler de l'air vers le radiateur 5 en vue de refroidir le fluide caloporteur qui y circule.

Le groupe moto ventilateur 3 est disposé en vis-à-vis du radiateur 5.

Il comporte un cadre support périphérique rectangulaire 9 et de même le radiateur 5 comporte un cadre support périphérique rectangulaire 11 complémentaire.

Dans la présente demande, les expressions « cadre support » ou « cadre » désignent indifféremment un « cadre support périphérique ».

Les cadres définissent en outre des plans parallèles au plan YZ du repère orthonormé des figures.

Les cadres supports 9, 11 du groupe moto ventilateur 3 et radiateur 5 sont généralement montés sur le groupe moto ventilateur 3 et le radiateur 5 respectivement, avant leur assemblage au moyen du dispositif selon l'invention.

Les cadres supports 9, 11 sont de préférence conformés en sorte que le groupe moto ventilateur 3 et le radiateur 5 soient inscrits dimensionnellement dans chacun de leur cadre support après leur montage sur leur cadre respectif. Autrement dit, le groupe moto ventilateur 3 et le radiateur 5 ne font pas saillie de leur cadre 9, 11 après montage sur celui-ci.

Ces cadres supports 9, 11 sont par exemple rectangulaires.

Ces cadres supports 9, 11 peuvent être issus de moulage en matière plastique, par exemple de type polypropylène ou polyamide.

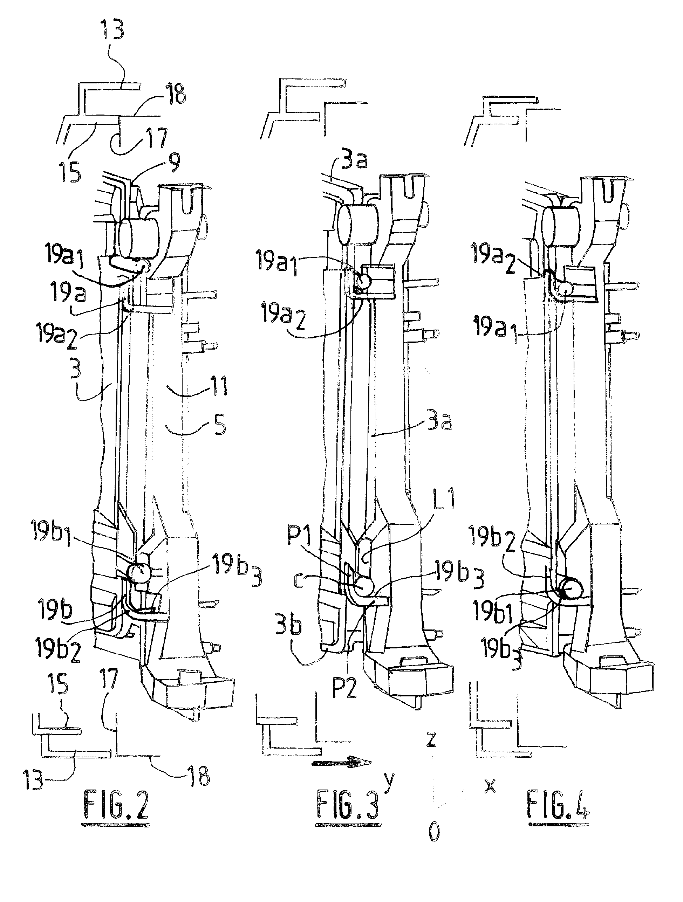

Le cadre support 9 du groupe moto ventilateur 3 comporte deux chicanes parallèles dirigées vers le radiateur 5 (fig. 2, 3 et 4). Une chicane externe longue 13 destinée à recouvrir le bord périphérique latéral 18 du cadre support 11 du radiateur 5 et une chicane interne courte 15 destinée à venir en vis-à-vis du bord périphérique frontal 17 du cadre support 11 de radiateur 5, perpendiculairement à ce bord 17 (figure 2).

Le bord périphérique latéral 18 du cadre support 11 recouvert par la chicane externe 13 s'étend perpendiculairement au bord périphérique frontal 17 du cadre support 11. Ce bord périphérique frontal 17 est parallèle au plan YZ du repère des figures, parallèle au plan formé par le cadre support 11.

On entend par chicane, un dispositif qui contrarie le cheminement d'un fluide en mouvement, par exemple des éléments de cadre support qui induisent un passage en zigzag du fluide pulsé, latéralement entre les deux cadres supports. Ces éléments s'étendent généralement sur toute la périphérie des cadres supports.

Les chicanes externe 13 et interne 15 sont par exemple des parois s'étendant généralement parallèlement l'une à l'autre, tel que représenté sur les figures. Des formes plus complexes non représentées peuvent toutefois être envisagées.

Lorsque les cadres supports 9, 11 sont assemblés l'un à l'autre, la chicane externe 13 recouvre ou coiffe le bord périphérique latéral 18 du cadre support 11 qui s'étend parallèlement aux chicanes, tandis que la chicane interne 15 est située en regard du bord périphérique frontal 17 du cadre support 11 à une distance prédéterminée de ce bord périphérique frontal 17 (suivant une direction perpendiculaire au plan du cadre support portant les chicanes). La chicane interne 15 présente ainsi une dimension plus courte que la chicane externe 13 suivant la direction X de sorte que la chicane interne est en retrait relativement à la chicane externe (suivant une direction perpendiculaire au plan du cadre support portant les chicanes).

Les cadres supports 9, 11, respectivement du groupe moto ventilateur 3 et du radiateur 5, sont en outre pourvus chacun d'éléments de points de fixation 19 du groupe moto ventilateur 3 au radiateur 5 :
- deux points de fixation supérieurs 19a disposés chacun sensiblement à un coin supérieur de chacun des cadres supports 9, 11, et généralement identiques, et
- deux points de fixation inférieurs 19b disposés chacun sensiblement à un coin inférieur de chacun des cadres support 9, 11, et généralement identiques.

Ces éléments 19a, 19b sont agencés pour coopérer en prise deux à deux, ensemble et simultanément.

En position de montage des cadres supports 9, 11 l'un par rapport à l'autre :
- les deux points de fixation supérieurs 19a peuvent être à la même hauteur (sur une même ligne horizontale parallèle à l'axe Y), de même, les deux points de fixation inférieurs 19b peuvent être à la même hauteur (parallèle à l'axe Y), et/ou,
- un point de fixation supérieur 19a et un point de fixation inférieur 19b d'un même côté latéral des cadres supports 9, 11 peuvent être disposés sur une même ligne verticale (parallèle à l'axe Z).

Dans l'exemple, les éléments des deux points de fixation supérieurs 19a sont identiques et comprennent chacun :
- un doigt 19a1 solidaire du cadre support 9 du groupe moto ventilateur 3, et
- une patte 19a2 solidaire du cadre support 11 du radiateur 5, cette patte 19a2 délimitant (avec le cadre support 11) un logement en U, dont la section présente une forme complémentaire de la section transversale du doigt 19a1.

Chaque doigt 19a1 est conformé pour coulisser dans ce logement en U.

Plus particulièrement, le doigt 19a1 s'étend parallèlement à la direction Y (parallèlement au plan du cadre support 9) et la patte 19a2 s'étend parallèlement au plan XZ (perpendiculaire au plan du cadre support 11), de sorte que chaque doigt 19a1 coulisse dans son logement en U correspondant suivant une direction de coulissement parallèle à l'axe Z.

La section des doigts 19a1 des points de fixation est dimensionnée pour correspondre à l'entraxe de passage du logement en U défini entre les pattes 19a2 des points de fixation et le cadre support 11 afin de guider parfaitement le coulissement des doigts dans ces logements.

Ces éléments 19a1, 19a2 sont configurés pour coopérer l'un avec l'autre à l'assemblage afin que la partie supérieure 3a du groupe moto ventilateur 3 soit disposée à une distance prédéterminée relativement au radiateur 5, à savoir suivant la direction X perpendiculaire au plan des cadres supports 9, 11 assemblés. Cette distance peut être de l'ordre de quelques millimètres, par exemple de l'ordre de 1 à 3 mm, de manière à maintenir un jeu serré entre les cadres supports 9, 11.

Les deux points de fixation inférieurs 19b, également identiques, comprennent chacun :
- un doigt 19b1 solidaire du cadre support 9 du groupe moto ventilateur 3, et
- une patte 19b2, en forme de L, solidaire du cadre support 11 du radiateur 5 et délimitant avec le cadre support 11 un logement en L (figure 5). Ce logement en L présente une section de forme complémentaire de la section transversale du doigt 19b 1.

Chaque doigt 19b1 est conformé pour coulisser dans ce logement en L.

Plus particulièrement, le doigt 19b1 s'étend parallèlement à la direction Y et la patte 19b2 en forme de L comprend une branche principale P1 s'étendant suivant la direction Z et une branche inférieure P2 solidaire du cadre support 11 et s'étendant suivant la direction X.

Le logement en L comprend donc :
- une branche principale délimitée par la branche principale P1 de la patte 19b2 et une surface interne L1 du cadre support 11 en regard de cette branche P1,
- une branche inférieure délimitée par la branche inférieure P2 de la patte 19b2, par une surface L3 du cadre support 11 en regard de cette branche P2 et par une surface L4 du cadre support 11 adjacente à la branche P2 et à la surface L3.

Ainsi, chaque doigt 19b 1 coulisse dans la branche principale de son logement en L correspondant suivant une direction de coulissement parallèle à l'axe Z et dans la branche inférieure de son logement en L suivant une direction de coulissement parallèle à l'axe X.

En général, on désigne par « branche principale » d'un L sa branche de plus grande longueur, et par « branche inférieure » du L sa branche de plus petite longueur.

Le logement en L est défini du côté du cadre support 11 du radiateur 5 par la surface interne L1 disposée en regard de la branche principale P1 de la patte 19b2, parallèlement à cette branche principale P1 de la patte 19b2, dans le plan YZ.

Du côté de son extrémité supérieure, cette surface interne L1 est reliée à la partie inférieure du cadre support 11 par une rampe oblique L2, qui peut servir de guidage pour le doigt 19b 1.

Du côté de son extrémité inférieure, la surface interne L1 forme un épaulement en retrait comprenant la surface L3 s'étendant parallèlement à la branche inférieure P2 de la patte 19b2 et la surface L4, parallèle à la surface L1 et formant le fond de la branche inférieure du logement en L délimité par la patte 19b2.

La surface interne L1 est distante du bord périphérique frontal 17 du cadre support 11, par exemple d'environ 14 à 15 mm. Cette distance est choisie de sorte que lorsque les doigts 19b1 coulissent chacun dans la branche principale de leur logement en L, les parties inférieures des cadres supports 9, 11 soient suffisamment écartées l'une de l'autre pour ne pas se toucher.

L'ouverture du logement en L est ainsi située à une extrémité de la branche principale P1 de la patte 19b2, et le fond de ce logement est situé à l'autre extrémité de la patte 19b2 laquelle est solidarisée au cadre support 11.

Les ouvertures des deux logements en U et L sont dirigées dans la même direction, à savoir vers le bord supérieur des cadres suivant l'axe Z.

Ces éléments 19b1, 19b2 sont configurés pour coopérer l'un avec l'autre à l'assemblage afin d'écarter la partie inférieure 3b du groupe moto ventilateur 3 relativement au radiateur 5 lorsque le doigt 19b 1 est inséré à l'intérieur de la branche principale du logement en L (entre la partie P1 de la patte 19b2 et la surface interne L1 du cadre 11, contre celles-ci), et de ramener la partie inférieure 3b du groupe moto ventilateur 3 à une distance prédéterminée relativement au radiateur 5 suivant la direction X (par exemple de 1 à 3 mm) lorsque le doigt 19b 1 est poussé au fond de la branche inférieure du logement en L, contre la surface L4.

Un clip de verrouillage 19b3 est disposé sur la branche inférieure P2 de la patte 19b2 afin de bloquer le doigt 19b1 au fond de la branche inférieure du logement en L, contre la surface L4 (figures 5 et 6). Ce clip 19b3 est, dans l'exemple représenté, une languette élastique qui s'efface au passage du doigt 19b1 et remonte contre celui-ci pour l'arrêter en position au fond de la branche dès qu'il est passé sur la languette.

L'un des doigts inférieurs 19b1, par exemple le doigt droit 19b 1 (sur la partie droite de la figure 1 et à la figure 6) du groupe moto ventilateur 3 comporte à son extrémité un talon de guidage latéral c en forme de disque destiné à glisser latéralement le long du bord de la surface L1, en appui contre une surface L5. Ce glissement est latéral du fait d'un contact suivant la direction Y entre le talon c et la surface L5. Cette surface L5 s'étend perpendiculairement à la surface L1 et la relie au cadre support 11. Ce talon c est destiné à maintenir l'indexage de positionnement latéral (en Y) des cadres supports l'un par rapport à l'autre.

Par indexage latéral d'un cadre support par rapport à l'autre, on entend que les cadres supports sont positionnés l'un par rapport à l'autre suivant une direction parallèle au plan défini par les cadres supports et parallèle à leurs bords inférieurs ou supérieurs (en Y).

Un tel indexage latéral pourrait être prévu sur les deux doigts inférieurs, et/ou sur au moins l'un des doigts supérieurs.

En variante ou en combinaison, cet indexage latéral peut consister en un système de rainures et nervures complémentaires verticales, réalisées sur au moins un des points de fixation.

Avantageusement, le bord supérieur de chacune des pattes de point de fixation 19 est évasé vers l'extérieur afin de faciliter l'introduction des doigts 19a1, 19b1 à l'intérieur des logements définis par les pattes 19a2, 19b2. Ce bord supérieur évasé est désigné par P3 sur la figure 5.

Le procédé d'assemblage est à présent décrit.

Le radiateur 5 étant préalablement fixé au moteur du véhicule dans le compartiment moteur de ce dernier, les étapes successives suivantes sont effectuées.

On réalise d'abord un pré positionnement d'assemblage du groupe moteur ventilateur 3 au radiateur 5, les doigts 19a1, 19b1 étant positionnés au dessus des pattes 19a2, 19b2, prêts à être engagés dans les ouvertures des logements en U et L (figure 2).

Le bord supérieur évasé vers l'extérieur P3 (visible à la figure 5) de chacune des pattes 19a2, 19b2 facilite l'introduction des doigts 19a1, 19b1 dans les logements en U et L, entre les pattes 19a2, 19b2 et le cadre support 11.

Le talon de guidage latéral c est appliqué contre le bord de la surface L1, en appui contre la surface L5, ce qui assure l'indexage de positionnement en Y.

La partie supérieure de la chicane externe 13 est alors disposée au dessus du bord périphérique latéral 18 du cadre support 11 de radiateur 5 et la partie supérieure de la chicane interne 15 du groupe moto ventilateur 3 est appliquée proche de la partie supérieure du bord périphérique frontal 17 du cadre support 11 du radiateur 5, en regard de celui-ci.

Une translation vers le bas (en Z) du groupe moto ventilateur 3 relativement au radiateur 5 est ensuite effectuée (figure 3), le talon de guidage latéral c étant maintenu glissant contre la surface L5. Chacun des doigts 19a1, 19b1 glisse vers le bas dans les logements en U et en L correspondants, jusqu'à venir au fond du logement en U pour les doigts 19a1 et en butée contre la branche inférieure P2 des pattes 19b2 pour les doigts 19b 1.

Il est ainsi préférable que les pattes 19a2 des points de fixation supérieure et les pattes 19b2 des points de fixation inférieure soient configurées de sorte que la longueur de coulissement des doigts 19a2 le long de la branche principale P1 des pattes 19b2 jusqu'à la branche inférieure P2 de ces pattes 19b2 soit identique à la longueur de coulissement des doigts 19a1 jusqu'au fond du logement en U défini par les pattes 19a2.

Lors de cette translation vers le bas :
- la partie supérieure 3a du groupe moteur ventilateur est guidée relativement au radiateur 5, suivant la direction X perpendiculaire au plan du cadre support 11 du radiateur 5. Du fait de ce guidage suivant la direction X, un jeu serré peut être maintenu entre le radiateur 5 et le groupe moto-ventilateur 3, par exemple de 1 à 3 mm du radiateur 5,
- la partie inférieure 3b est maintenue écartée du radiateur 5 du fait de l'éloignement entre la surface L1 et le bord périphérique frontal 17 du cadre support 11 du radiateur 5. La partie inférieure de 1a chicane externe 13 du groupe moto ventilateur 3 est alors maintenue dans cette translation à distance du radiateur 5 sans risque de le toucher et de l'endommager (risque de fuite du radiateur).

De manière générale, les parties inférieures des cadres supports 9 et 11 sont maintenues écartées d'une distance prédéterminée, suffisante pour que la ou les chicanes d'un cadre support ne touche(nt) pas et n'agresse(nt) pas l'autre cadre support ou l'élément solidaire de l'autre cadre support. Cette distance pourra être par exemple de 12 à 15 mm, de préférence de 12 mm.

Par exemple, les pattes 19a2 des points de fixation supérieure pourront être fixées au bord périphérique frontal 17 du cadre support 11 (ce bord périphérique 17 définissant alors le logement en U avec ces pattes), et les surfaces internes L1 des points de fixation inférieure pourront être distantes de ce bord périphérique frontal 17 de la distance prédéterminée définissant l'écartement des parties inférieures des cadres supports 9 et 11.

A fond de course de translation vers le bas (en Z), la partie supérieure de la chicane externe 13 vient alors coiffer le bord périphérique latéral 18 du cadre support 11 de radiateur 5, tandis que la partie supérieure de la chicane interne 15 est à jeu serré (par exemple de 1 à 3mm) contre le bord périphérique frontal 17 de cadre support du radiateur 5 (suivant la direction X).

La partie inférieure de chicane externe 13, en cours de translation vers le bas, est déplacée en regard de la partie inférieure du bord périphérique frontal 17 du cadre de radiateur 5 et vient ensuite coiffer la partie inférieure du bord périphérique 18 du cadre 11 de radiateur 5 en fin de translation vers le bas.

On peut alors réaliser une translation transversale en X vers le radiateur 5 de la partie inférieure 3b du groupe moto ventilateur 3 en la poussant, les doigts 19b1 de chacun des points de fixation inférieure glissant sur la branche inférieure P2 des pattes 19b2 et venant en fin de course (figure 4) en appui contre la surface L4. La languette élastique de clip 19b3 s'efface au passage du doigt 19b1 et remonte contre celui-ci pour le verrouiller en position en X, au fond de la branche inférieure du logement en L. La partie inférieure de la chicane externe 13 vient alors en recouvrement de la partie inférieure du bord périphérique latéral 18 du cadre support 11 de radiateur 5 et il en est de même sur toute la périphérie du bord périphérique latéral 18 du cadre support 11 de radiateur 5. La chicane interne 15 est alors positionnée à jeu serré suivant la direction X (par exemple 1 à 3 mm) face au bord périphérique frontal 17 du cadre support 11 de radiateur 5.

Le démontage est effectué de manière inverse de l'assemblage précité. Il suffit de déverrouiller les clips 19b3 en appuyant sur les languettes puis de faire glisser les doigts 19a1, 19b1 dans leur logement, le groupe moto ventilateur 3 remontant le long du radiateur 5, tandis que sa partie inférieure 3b en est écartée de manière inverse à la translation vers le bas. Lorsque les doigts sont parvenus à l'extrémité supérieure des pattes, le groupe moto ventilateur 3 peut être extrait du radiateur 5.

Le dispositif selon l'invention permet ainsi de monter un groupe moto-ventilateur à chicane d'étanchéité sur un radiateur, dans un espace minimal devant le radiateur et sans risque d'agresser ce dernier.

Généralement, le cadre support comportant la ou les chicanes est celui comportant les doigts de fixation.

Dans l'exemple décrit ci-dessus, le cadre support comportant la ou les chicanes est le cadre support du groupe moto ventilateur 3.

Bien que généralement non employé, on pourrait prévoir des chicanes d'étanchéité sur le cadre de radiateur pour coiffer le groupe moto ventilateur.

On pourrait également envisager que les doigts de point de fixation soient solidaires du radiateur (ou de son cadre support) et que les pattes fassent partie du groupe moto ventilateur, ces pattes devant alors être tournées d'un demi tour pour avoir leur ouverture en bas.

## Revendications

1. Dispositif d'assemblage d'un groupe moto ventilateur (3) à un radiateur (5) d'un véhicule automobile, le dispositif d'assemblage comprenant:
- un premier cadre périphérique support (9) destiné à supporter le groupe moto ventilateur (3) et un deuxième cadre périphérique support (11) destiné à supporter le radiateur (5), l'un des cadres supports (9) au moins étant pourvu d'au moins une chicane d'étanchéité périphérique (13) destinée à venir en recouvrement sur un bord périphérique latéral de l'autre cadre support (11), et
- au moins deux points de fixation supérieurs (19a) et au moins deux points de fixation inférieurs (19b), solidaires de chacun desdits cadres supports (9, 11),
**caractérisé en ce que** chaque point de fixation (19a, 19b) comporte un doigt (19a1, 19b1) et une patte (19a2, 19b2) définissant un logement et agencés pour coopérer en prise ensemble simultanément, les doigts (19a1, 19b1) des points de fixation étant solidaires d'un cadre support (9), les pattes correspondantes (19a2, 19b2) étant solidaires de l'autre cadre support (11), et dans lequel
chaque patte (19a2) d'un point de fixation supérieur (19a) définit un logement en U avec le cadre support (11) auquel elle est solidarisée, et le doigt correspondant (19a1) est conformé pour coulisser dans ce logement en U, les doigts (19a1) et pattes (19a2) des points de fixation supérieurs (19a) étant positionnés et agencés de sorte que, lorsque les doigts (19a1) sont insérés dans les logements en U, les parties supérieures des cadres support (9, 11) sont maintenues à une distance prédéterminée l'une par rapport à l'autre suivant une direction perpendiculaire au plan des cadres supports (9, 11), et
chaque patte (19b2) d'un point de fixation inférieur (19b) est en forme de L et définit un logement en L avec le cadre support (11) auquel elle est solidarisée, l'ouverture de ce logement étant située à une extrémité de la branche principale (P1) de la patte (19b2) en L et le fond de ce logement étant situé à l'autre extrémité (P2) de la patte (19b2) solidarisée au cadre support (11), et le doigt (19b1) correspondant (19b1) est conformé pour coulisser dans ce logement en L, les doigts (19b1) et pattes (19b2) des points de fixation inférieurs (19b) étant positionnés et agencés de sorte que, lorsque les doigts (19b1) sont insérés dans la branche principale du logement en L, les parties inférieures des cadres supports (9, 11) sont maintenues écartées l'une de l'autre, et lorsque les doigts (19b1) sont insérés au fond de la branche inférieure du logement en L, les parties inférieures des cadres supports (9, 11) sont maintenues à une distance prédéterminée l'une par rapport à l'autre suivant une direction perpendiculaire au plan des cadres supports (9, 11),
et **en ce que** le dispositif d'assemblage comprend en outre:
- au moins un élément d'indexage latéral apte à positionner les cadres supports (9, 11) l'un par rapport à l'autre suivant une direction parallèle au plan des cadres supports (9, 11) et perpendiculaire à la direction de coulissement des doigts (19a1) dans les logements en U, et
- au moins un élément de verrouillage de l'assemblage des cadres supports (9, 11) l'un par rapport à l'autre.

2. Dispositif d'assemblage selon la revendication 1, **caractérisé en ce que** les cadres supports (9, 11) sont conformés de sorte que le groupe moto ventilateur (3) et le radiateur (5) soient inscrits dimensionnellement dans chacun de leur cadre support respectif (9, 11).

3. Dispositif d'assemblage selon la revendication 1 ou 2, **caractérisé en ce que** les cadres supports (9, 11) font partie intégrante du groupe moto ventilateur (3) et du radiateur (5) respectivement.

4. Dispositif d'assemblage selon l'une des revendications 1 à 3, **caractérisé en ce que** l'un des cadres supports (9) comporte deux chicanes périphériques, une chicane externe longue (13) destinée à venir en recouvrement d'un bord périphérique latéral (18) correspondant de l'autre cadre support (11), et une chicane interne (15), en retrait relativement à la chicane externe (13) et destinée à être positionnée en regard d'un bord périphérique frontal correspondant (17) de l'autre cadre support (11), à une distance prédéterminée dudit bord périphérique frontal (17).

5. Dispositif d'assemblage selon l'une des revendications 1 à 4, **caractérisé en ce que** l'élément d'indexage latéral comporte un talon (c) solidaire d'un élément d'un point de fixation (19), apte à être appliqué latéralement contre une surface complémentaire (L5) de l'autre élément dudit point de fixation (19).

6. Dispositif d'assemblage selon l'une quelconque des revendications précédentes, **caractérisé en ce que** l'élément d e verrouillage de l'assemblage des cadres supports (9, 11) comprend un élément (19b3) d'un point de fixation inférieur, mobile entre une position de verrouillage dans laquelle il bloque le déplacement d'un doigt (19b1) au fond de la branche inférieure du logement en L correspondant et une position de déverrouillage autorisant le déplacement dudit doigt (19b1) hors de ladite branche inférieure du logement en L.

7. Dispositif d'assemblage selon l'une quelconque des revendications précédentes, **caractérisé en ce que** la branche principale du logement en L est définie d'une part par la branche principale (P1) de la patte en L (19b2) et d'autre part par une surface interne (L1) du cadre support (11) auquel est solidarisée ladite patte (19b2), en regard de la branche principale (P1) de celle-ci, cette surface interne (L1) étant conformée de manière à maintenir écartée d'une distance prédéterminée la partie inférieure (3b) du cadre support (9) portant les doigts (19b1) de la partie inférieure de l'autre cadre support (11), lorsque les doigts (19b1) de point de fixation inférieur sont insérés chacun dans la branche principale du logement en L, appliqués chacun contre la surface interne (L1).

8. Procédé de mise en oeuvre du dispositif d'assemblage selon l'une quelconque des revendications précédentes, le procédé comprenant les phases suivantes :
- pré positionner l'un (9) ou premier des cadres supports par rapport à l'autre cadre support (11) en le disposant de sorte que les doigts (19a1, 19b1) soient en regard de l'ouverture des logements en U et en L définis par les pattes correspondantes (19a2, 19b2), les cadres supports (9, 11) étant indexés latéralement l'un par rapport à l'autre,
- translater vers le bas le premier cadre support (9) relativement à l'autre cadre support (11), les doigts (19a1, 19b1) des points de fixation glissant vers le bas respectivement à l'intérieur de chacun des logements en U et en L, jusqu'au fond du logement en U,
- pousser la partie inférieure (3b) du premier cadre support (9) vers l'autre cadre support (11) afin de translater chacun des doigts (19b1) de points de fixation inférieur au fond de la branche inférieure de logement en L correspondante, et
- verrouiller l'engagement de chacun des doigts (19b1) de points de fixation inférieur au fond de la branche inférieure de logement en L.

9. Procédé selon la revendication 8, dans lequel l'un des cadres support (9) comporte deux chicanes périphériques, une chicane externe longue (13) destinée à venir en recouvrement d'un bord périphérique latéral (18) correspondant de l'autre cadre support (11) et une chicane interne (15), en retrait relativement à la chicane externe (13) et destinée à être positionnée en regard d'un bord périphérique frontal correspondant (17) dudit autre cadre support (11), le procédé comprenant les étapes suivantes :
- un pré positionnement d'assemblage du cadre support (9) comportant les chicanes (13, 15) relativement à l'autre cadre support (11), dans lequel les doigts (19a1, 19b1) sont en regard de l'ouverture des logements en U et en L définis par les pattes correspondantes (19a2, 19b2), les cadres supports (9, 11) étant indexés latéralement l'un par rapport à l'autre, et où la chicane externe (13) est au dessus de la partie supérieure du bord périphérique latéral (18) de l'autre cadre support (11) et la chicane interne (15) du cadre support (9) est positionnée en regard de partie supérieure du bord périphérique frontal (17) de l'autre cadre support (11), à une distance prédéterminée dudit bord périphérique frontal (17) la,
- une translation vers le bas du cadre support (9) comportant les chicanes (13, 15) relativement à l'autre cadre support (11), chacun des doigts (19a1, 19b1) des points de fixation glissant vers le bas à l'intérieur des logements en U et en L correspondants, jusqu'à venir au fond du logement en U, où la chicane externe (13) du cadre support (9) vient en recouvrement sur la partie supérieure du bord périphérique latéral (18) de l'autre cadre support (11),
- la translation de la partie inférieure (3b) du cadre support (9) comportant les chicanes (13, 15) vers l'autre cadre support (11), les doigts (19b1) de chacun des points de fixation inférieure glissant dans la branche inférieure du logement en L jusqu'à venir ainsi au fond de ce logement, la chicane externe (13) étant alors en recouvrement de la partie inférieure du bord périphérique latéral (18) de l'autre cadre support (11), et
- un verrouillage en position du cadre support (9) comportant les chicanes (13, 15) relativement à l'autre cadre support (11).

## Patentansprüche

1. Vorrichtung zur Montage eines Motorgebläseaggregats (3) auf einen Kühler (5) eines Kraftfahrzeugs, wobei die Vorrichtung zur Montage Folgendes aufweist:
- eineN ersten Umfangstragrahmen (9), der dazu bestimmt ist, das Motorgebläseaggregat (3) zu tragen, und einen zweiten Umfangstragrahmen (11), der dazu bestimmt ist, den Kühler (5) zu tragen, wobei mindestens einer der Tragrahmen (9) mit mindestens einer umlaufenden Dichtungsschikane (13) versehen ist, die dazu bestimmt ist, auf einem seitlichen Umfangsrand des anderen Tragrahmens (11) in Abdeckung zu kommen, und
- mindestens zwei obere Befestigungspunkte (19a) und mindestens zwei untere Befestigungspunkte (19b), die jeweils mit den Tragrahmen (9, 11) fest verbunden sind,
**dadurch gekennzeichnet, dass**
jeder Befestigungspunkt (19a, 19b) einen Finger (19a1, 19b1) und eine Lasche (19a2, 19b2) aufweist, die eine Aufnahme definieren und angeordnet sind, um gleichzeitig miteinander in Eingriff zusammenzuwirken, wobei die Finger (19a1, 19b1) der Befestigungspunkte mit einem Tragrahmen (9) fest verbunden sind, wobei die entsprechenden Laschen (19a2, 19b2) mit dem anderen Tragrahmen (11) fest verbunden sind, und wobei
jede Lasche (19a2) eines oberen Befestigungspunkts (19a) eine U-förmige Aufnahme mit dem Tragrahmen (11) definiert, mit dem sie fest verbunden ist, und der entsprechende Finger (19a1) konfiguriert ist, um in dieser U-förmigen Aufnahme zu gleiten, wobei die Finger (19a1) und die Lasche (19a2) der oberen Befestigungspunkte (19a) derart positioniert und angeordnet sind, dass, wenn die Finger (19a1) in die U-förmigen Aufnahmen eingefügt sind, die oberen Abschnitte der Tragrahmen (9, 11) in einem vorbestimmten Abstand voneinander entlang einer Richtung senkrecht zu der Ebene der Tragrahmen (9, 11) gehalten sind, und
jede Lasche (19b2) eines unteren Befestigungspunkts (19b) L-förmig ist und eine L-förmige Aufnahme mit dem Tragrahmen (11) definiert, mit dem sie fest verbunden ist, wobei die Öffnung dieser Aufnahme an einem Ende des Hauptarms (P1) der L-förmigen Lasche (19b2) angeordnet ist und der Boden dieser Aufnahme an dem anderen Ende (P2) der Lasche (19b2) angeordnet ist, die mit dem Tragrahmen (11) fest verbunden ist, und der entsprechende Finger (19b1) ausgebildet ist, um in dieser L-förmigen Lasche zu gleiten, wobei die Finger (19b1) und die Laschen (19b2) der unteren Befestigungspunkte (19b) derart positioniert und angeordnet sind, dass, wenn die Finger (19b1) in dem Hauptarm der L-förmigen Aufnahme eingefügt sind, die unteren Abschnitte der Tragrahmen (9, 11) in Abstand voneinander gehalten sind, und, wenn die Finger (19b1) an dem Boden des unteren Arms der L-förmigen Aufnahme eingefügt sind, die unteren Abschnitte der Tragrahmen (9, 11) in einem vorbestimmten Abstand voneinander entlang einer Richtung senkrecht zu der Ebene der Tragrahmen (9, 11) gehalten sind, und
dass die Vorrichtung zur Montage ferner Folgendes aufweist:
- mindestens ein seitliches Indexierungselement, das geeignet ist, die Tragrahmen (9, 11) zueinander entlang einer Richtung parallel zu der Ebene der Tragrahmen (9, 11) und senkrecht zu der Gleitrichtung der Finger (19a1) in den U-förmigen Aufnahmen anzuordnen, und
- mindestens ein Element zum Verriegeln der Anordnung der Tragrahmen (9, 11) zueinander.

2. Vorrichtung zur Montage nach Anspruch 1, **dadurch gekennzeichnet, dass** die Tragrahmen (9, 11) derart gestaltet sind, dass das Motorgebläseaggregat (3) und der Kühler (5) abmessungsmäßig in ihrem jeweiligen Tragrahmen (9, 11) eingepasst sind.

3. Vorrichtung zur Montage nach Anspruch 1 oder 2, **dadurch gekennzeichnet, dass** die Tragrahmen (9, 11) fester Bestandteil jeweils des Motorgebläseaggregats (3) und des Kühlers (5) sind.

4. Vorrichtung zur Montage nach einem der Ansprüche 1 bis 3, **dadurch gekennzeichnet, dass** einer der Tragrahmen (9) zwei umlaufende Schikanen aufweist, eine lange äußere Schikane (13), die dazu bestimmt ist, mit einem entsprechenden seitlichen Umfangsrand (18) des anderen Tragrahmens (11) in Abdeckung zu kommen, und eine innere Schikane (15), die relativ zu der äußeren Schikane (13) zurückversetzt ist und dazu bestimmt ist, gegenüber einem entsprechenden vorderen Umfangsrand (17) des anderen Tragrahmens (11) in einem vorbestimmten Abstand von dem vorderen Umfangsrand (17) angeordnet zu werden.

5. Vorrichtung zur Montage nach einem der Ansprüche 1 bis 4, **dadurch gekennzeichnet, dass** das seitliche Indexierungselement einen Absatz (c) aufweist, der mit einem Element eines Befestigungspunktes (19) fest verbunden ist, der geeignet ist, seitlich gegen eine komplementäre Fläche (L5) des anderen Elementes des Befestigungspunktes (19) angebracht zu werden.

6. Vorrichtung zur Montage nach einem der vorhergehenden Ansprüche, **dadurch gekennzeichnet, dass** das Element zum Verriegeln der Anordnung der Tragrahmen (9, 11) ein Element (19b3) eines unteren Befestigungspunktes aufweist, das beweglich zwischen einer Verriegelungsposition, in der es das Verschieben eines Fingers (19b1) am Boden des unteren Arms der entsprechenden L-förmigen Aufnahme blockiert, und einer Entriegelungsposition ist, die das Verschieben des Fingers (19b1) aus dem unteren Arm der L-förmigen Aufnahme gestattet.

7. Vorrichtung zur Montage nach einem der vorhergehenden Ansprüche, **dadurch gekennzeichnet, dass** der Hauptarm der L-förmigen Aufnahme einerseits durch den Hauptarm (P1) der L-förmigen Lasche (19b2) und andererseits durch eine innere Fläche (L1) des Tragrahmens (11) definiert ist, mit dem die Lasche (19b2) gegenüber dem Hauptarm (P1) davon fest verbunden ist, wobei diese innere Fläche (L1) gebildet ist, um den unteren Abschnitt (3b) des Tragrahmens (9), der die Finger (19b1) des unteren Abschnitts des anderen Tragrahmens (11) trägt, in einem vorbestimmten Abstand zu halten, wenn die Finger (19b1) des unteren Befestigungspunkts jeweils in dem Hauptarm der L-förmigen Lasche, jeweils gegen die innere Fläche (L1) angelegt, eingefügt sind.

8. Verfahren zur Umsetzung der Vorrichtung zur Montage nach einem der vorhergehenden Ansprüche, wobei das Verfahren die folgenden Phasen aufweist:
- Vorpositionieren eines (9) oder des ersten Tragrahmens relativ zu dem anderen Tragrahmen (11), indem er derart angeordnet wird, dass die Finger (19a1, 19b1) gegenüber der Öffnung der U-förmigen Aufnahme und der L-förmigen Aufnahme durch die entsprechenden Laschen (19a2, 19b2) definiert werden, wobei die Tragrahmen (9, 11) seitlich zueinander indexiert werden,
- nach unten Verschieben des ersten Tragrahmens (9) relativ zu dem anderen Tragrahmen (11), wobei die Finger (19a1, 19b1) der Befestigungspunkte jeweils im Inneren von jeder der U-förmigen Aufnahme und der L-förmigen Aufnahme bis zum Boden der U-förmigen Aufnahme nach unten gleiten,
- Schieben des unteren Abschnitts (3b) des ersten Tragrahmens (9) zu dem anderen Tragrahmen (11), um jeden der Finger (19b1) der unteren Befestigungspunkte am Boden des unteren Arms der entsprechenden L-förmigen Aufnahme zu verschieben, und
- Verriegeln des Eingreifens von jedem der Finger (19b1) der unteren Befestigungspunkte am Boden des unteren Arms der L-förmigen Aufnahme.

9. Verfahren nach Anspruch 8, wobei einer der Tragrahmen (9) zwei umlaufende Schikanen aufweist, eine lange äußere Schikane (13), die dazu bestimmt ist, mit einem entsprechenden seitlichen Umfangsrand (18) des anderen Tragrahmens (11) in Abdeckung zu kommen, und eine innere Schikane (15), die relativ zu der äußeren Schikane (13) zurückversetzt ist und dazu bestimmt ist, gegenüber einem entsprechenden vorderen Umfangsrand (17) des anderen Tragrahmens (11) angeordnet zu werden, wobei das Verfahren die folgenden Schritte aufweist:
- ein Vorpositionieren der Anordnung des Tragrahmens (9), der die Schikanen (13, 15) aufweist, relativ zu dem anderen Tragrahmen (11), wobei die Finger (19a1, 19b1) gegenüber der Öffnung der U-förmigen Aufnahme und der L-förmigen Aufnahme durch die entsprechenden Laschen (19a2, 19b2) definiert werden, wobei die Tragrahmen (9, 11) seitlich zueinander indexiert werden, und wobei die äußere Schikane (13) über dem oberen Abschnitt des seitlichen Umfangsrandes (18) des anderen Tragrahmens (11) ist und die innere Schikane (15) des Tragrahmens (9) gegenüber dem oberen Abschnitt des vorderen Umfangsrandes (17) des anderen Tragrahmens (11) in einem vorbestimmten Abstand von dem vorderen Umfangsrand (17) angeordnet wird,
- ein nach unten Verschieben des Tragrahmens (9), der die Schikanen (13, 15) aufweist, relativ zu dem anderen Tragrahmen (11), wobei jeder der Finger (19a1, 19b1) der Befestigungspunkte jeweils im Inneren der entsprechenden U-förmigen Aufnahme und der entsprechenden L-förmigen Aufnahme nach unten gleitet, bis er zum Boden der U-förmigen Aufnahme kommt, wo die äußere Schikane (13) des Tragrahmens (9) auf dem oberen Abschnitt des seitlichen Umfangsrandes (18) des anderen Tragrahmens (11) in Abdeckung kommt,
- das Verschieben des unteren Abschnitts (3b) des Tragrahmens (9), der die Schikanen (13, 15) aufweist, zu dem anderen Tragrahmen (11), wobei die Finger (19b1) jedes der unteren Befestigungspunkte in dem unteren Arm der L-förmigen Aufnahme gleiten, bis sie auf diese Weise zum Boden dieser Aufnahme kommen, wobei die äußere Schikane (13) dann in Abdeckung mit dem unteren Abschnitt des seitlichen Umfangsrandes (18) des anderen Tragrahmens (11) ist, und
- ein Verriegeln in Position des Tragrahmens (9), der die Schikanen (13, 15) aufweist, relativ zu dem anderen Tragrahmen (11).

## Claims

1. Device for assembling a motor-fan unit (3) to a radiator (5) of a motor vehicle, the assembly device comprising:
- a first peripheral support frame (9) intended to support the motor-fan unit (3) and a second peripheral support frame (11) intended to support the radiator (5), at least one of the support frames (9) being fitted with at least one peripheral sealing baffle (13) intended to overlap the lateral peripheral edge of the other support frame (11),
- at least two upper fixing points (19a) and at least two lower fixing points (19b) integral to each of said support frames (9, 11),
**characterized in that** each fixing point (19a, 19b) comprises a pin (19a1, 19b1) and a lug (19a2, 19b2) defining a housing and arranged to cooperate by engaging together simultaneously, the pins (19a1, 19b1) of the fixing points being integral with one support frame (9) and the corresponding lugs (19a2, 19b2) being integral with the other support frame (11), and wherein
each lug (19a2) of an upper fixing point (19a) defines a U-shaped housing with the support frame (11) with which it is integral, and the corresponding pin (19a1) is shaped to slide in this U-shaped housing, the pins (19a1) and lugs (19a2) of the upper fixing points (19a) being positioned and arranged such that when the pins (19a1) are inserted in the U-shaped housings, the upper parts of the support frames (9, 11) are held at a predefined distance from each other in a direction perpendicular to the plane of the support frames (9, 11), and
each lug (19b2) of a lower fixing point (19b) is L-shaped and defines an L-shaped housing with the support frame (11) with which it is integral, the opening of this housing being located at one end of the main branch (P1) of the L-shaped lug (19b2) and the base of this housing being located at the other end (P2) of the lug (19b2) integral with the support frame (11), and the corresponding pin (19b1) is shaped to slide in this L-shaped housing, the pins (19b1) and lugs (19b2) of the lower fixing points (19b) being positioned and arranged such that when the pins (19b1) are inserted in the main branch of the L-shaped housing, the lower parts of the support frames (9, 11) are held spaced apart, and when the pins (19b1) are inserted into the base of the lower branch of the L-shaped housing, the lower parts of the support frames (9, 11) are held at a predefined distance from each other in a direction perpendicular to the plane of the support frames (9, 11),
and **in that** the assembly device further comprises:
- at least one lateral indexing element able to position the support frames (9, 11) in relation to each other in a direction parallel to the plane of the support frames (9, 11) and perpendicular to the sliding direction of the pins (19a1) in the U-shaped housings, and
- at least one element for locking the assembly of support frames (9, 11) in relation to each other.

2. Assembly device according to Claim 1, **characterized in that** the support frames (9, 11) are shaped such that the motor-fan unit (3) and the radiator (5) are each enshrined dimensionally in their respective support frame (9, 11).

3. Assembly device according to Claim 1 or 2, **characterized in that** the support frames (9, 11) form an integral part of the motor-fan unit (3) and radiator (5) respectively.

4. Assembly device according to any of Claims 1 to 3, **characterized in that** one of the support frames (9) comprises two peripheral baffles, a long outer baffle (13) intended to overlap a corresponding lateral peripheral edge (18) of the other support frame (11), and an inner baffle (15) set back in relation to the outer baffle (13) and intended to be positioned facing a corresponding front peripheral edge (17) of the other support frame (11), at a predefined distance from said front peripheral edge (17).

5. Assembly device according to any of Claims 1 to 4, **characterized in that** the lateral indexing element comprises a heel (c) integral with an element of a fixing point (19) and able to be applied laterally against a complementary surface (L5) of the other element of said fixing point (19).

6. Assembly device according to any of the preceding claims, **characterized in that** the element for locking the assembly of the support frames (9, 11) comprises an element (19b3) of a lower fixing point which is movable between a locked position, in which it blocks the movement of a pin (19b1) at the base of the lower branch of the corresponding L-shaped housing, and an unlocked position allowing the movement of said pin (19b1) out of said lower branch of the L-shaped housing.

7. Assembly device according to any of the preceding claims, **characterized in that** the main branch of the L-shaped housing is defined firstly by the main branch (P1) of the L-shaped lug (19b2) and secondly by an inner surface (L1) of the support frame (11) with which said lug (19b2) is integral, facing the main branch (P1) thereof, this inner surface (L1) being shaped to keep the lower part (3b) of the support frame (9) carrying the pins (19b1) spaced, by a predefined distance, from the lower part of the other support frame (11) when the pins (19b1) of the lower fixing point are each inserted in the main branch of the L-shaped housing, applied against the inner surface (L1).

8. Method for implementing the assembly device according to any of the preceding claims, the method comprising the following phases:
- pre-positioning of the one (9) or the first of the support frames in relation to the other support frame (11) by arranging it such that the pins (19a1, 19b1) are facing the opening of the U-shaped and L-shaped housings defined by the corresponding lugs (19a2, 19b2), the support frames (9, 11) being indexed laterally in relation to each other,
- movement of the first support frame (9) downward relative to the other support frame (11), the pins (19a1, 19b1) of the fixing points sliding down respectively inside each of the U-shaped and L-shaped housings, as far as the base of the U-shaped housing,
- pushing the lower part (3b) of the first support frame (9) towards the other support frame (11) in order to move each of the pins (19b1) of the lower fixing point to the base of the lower branch of the corresponding L-shaped housing, and
- locking the engagement of each of the pins (19b1) of the lower fixing points at the base of the lower branch of the L-shaped housing.

9. Method according to Claim 8, wherein one of the support frames (9) comprises two peripheral baffles, a long outer baffle (13) intended to overlap a corresponding lateral peripheral edge (18) of the other support frame (11), and an inner baffle (15) set back relative to the outer baffle (13) and intended to be positioned facing a corresponding front peripheral edge (17) of said other support frame (11), the method comprising:
- a pre-positioning of the assembly of the support frame (9) comprising the baffles (13, 15) relative to the other support frame (11), wherein the pins (19a1, 19b1) are facing the opening of the U-shaped and L-shaped housings defined by the corresponding lugs (19a2, 19b2), the support frames (9, 11) being indexed laterally in relation to each other, and wherein the outer baffle (13) is above the upper part of the lateral peripheral edge (18) of the other support frame (11), and the inner baffle (15) of the support frame (9) is positioned facing the upper part of the front peripheral edge (17) of the other support frame (11), at a predefined distance from said front peripheral edge (17),
- a downward movement of the support frame (9) comprising the baffles (13, 15) relative to the other support frame (11), each of the pins (19a1, 19b1) of the fixing points sliding down inside the corresponding U-shaped and L-shaped housings, as far as the base of the U-shaped housing, wherein the outer baffle (13) of the support frame (9) overlaps the upper part of the lateral peripheral edge (18) of the other support frame (11),
- the movement of the lower part (3b) of the support frame (9) comprising the baffles (13, 15) towards the other support frame (11), the pins (19b1) of each of the lower fixing points sliding in a lower branch of the L-shaped housing until they reach the base of this housing, the outer baffle (13) then overlapping the lower part of the lateral peripheral edge (18) of the other support frame (11), and
- locking the support frame (9) comprising the baffles (13, 15) in position relative to the other support frame (11).
